# EUROPEAN PATENT SPECIFICATION

(11) **EP 1 616 484 B1**
(45) Date of publication and mention of the grant of the patent: **14.02.2007**
(21) Application number: 05012713.3
(22) Date of filing: 14.06.2005
(51) Int. Cl.: A01K 31/00

(54) **Integrative device and relative method of installation for the distribution of foodstuff on the litter and feeder area inside the unit for batteries for breeding laying hens**
Integrative Vorrichtung und ähnliches Ausführungsverfahren für die Verteilung von Nahrungsmitteln auf dem Streu- und Fressbereich innerhalb einer Käfigeinheit für das Züchten von Legehennen
Dispositif intégré et méthode analogue d'installation pour la distribution des aliments sur la zone litière et alimentaire à l'intérieur d'un ensemble de cages pour élever des pondeuses

(30) Priority: 14.07.2004 IT MI20041406
(43) Date of publication of application: 18.01.2006
(73) Proprietor: TECNO POULTRY EQUIPMENT S.r.l., 35010 Campo di S. Martino, PD (IT)
(72) Inventor: Lago, Leopoldo, 35013 Cittadella, Padova (IT)
(74) Representative: Petruzzelli, Antonio

(56) References cited:
- US-A- 3 319 606

## Description

The present invention relates to an integrative device and relative method of installation for the supply of feedstuff on the litter and feeder area inside battery units for breeding laying hens, which, through a modification to be made to the side feeder, allows the distribution of the feedstuff on at least one internal trough per unit, performing the function of litter and, where required, of additional feeder, in accordance with the new European laws introduced into Italy by decree law no. 267 of 29 July 2003.

These laws relate to the well-being of laying hens: more particularly, in the case of use of modified cages, the space available to the single hen is increased to 750 cm² and the total minimum area of each individual unit is expanded to 2000 cm². The feeder, whereto the hens must always have access, must offer at least 12 cm of width per animal. The total length of the side feeder which must be available for each unit is therefore at least 12 cm, multiplied by the number of animals in each unit. In the case of very wide batteries, the two side feeders for each level of the battery may not be sufficient for the food requirement of all the animals. For example, a unit measuring 240 cm x 132 cm may house up to 42 laying hens, with the need therefore for at least a total of 540 cm of feeder. The two side feeders instead measure 480 cm overall, revealing a deficiency of as many as 24 cm of feeder according to the aforementioned decree law no. 267. It is therefore necessary to add at least one supplementary feeder, for a total length of at least 24 cm, on whose type and positioning the decree law does not place restrictions, suitable for fulfilling the need of the hens which could not otherwise be fed by means of the side feeders alone. Laws in force also specify that the units be provided with a space for litter, to enable the animals to scratch and peck, without indications as to the shape and dimensions of the litter nor the type of material which can be distributed thereon, said material having to be in any case crumbly and peckable.

According to the state of the art, the numerous breeding batteries installed prior to 2003 have had to undergo those modifications required to make them comply with decree law no. 267, in particular the linear dimensions of the feeders, often insufficient, have entailed the addition of supplementary feeders inside the units. The supplementary feeders currently available on the market have the disadvantage of being supplied by additional feeding means, inside the cells, with very high complexity and cost in addition to considerable further costs of management, maintenance and operation. As far as the litter is concerned, the most widely used material is the foodstuff, as it is crumbly, peckable and easily distributable by the traditional feeding systems. The foodstuff moreover does not have the disadvantages of other possible materials, such as for example sand, shavings or shredded straw, which are difficult to distribute or create problems with the cleaning belts, or are polluting in that they are eventually mixed with the droppings. The distribution of the foodstuff on the litter, as in the case of the internal feeder, is generally performed by additional feeding systems to those of the side feeders, with a considerable increase in the costs of the system.

The Applicant, taking steps to comply with the regulations in force in Italy and in Europe, has devised and developed an integrative device and the relative method of installation for the supply of foodstuff, which is innovative, simple and effective, suitable for supplying at least one internal trough set up as supplementary feeder and litter, easy to access and such as to adapt the batteries to the new laws, and which exploits the existing systems of feeding of the two external side feeders. This device allows distribution of foodstuff in at least one trough placed inside the unit, taking the foodstuff directly from the side feeders of the battery, by suitable means.

The object of the present invention is therefore that of providing a device for the feeding of foodstuff on the litter and feeder area inside the units for batteries for breeding laying hens, which allows the distribution of the foodstuff on said area inside the unit simply and with the same scheduling of feeding performed for the side feeders.

Another object of the present invention is that of enabling a single feeding device for all the feeders required by the battery, internal and lateral, and for the litter areas, thus avoiding the need to install the feeding devices inside the units, formed by spirals, chains etc., all costly and complex to install.

A further object of the present invention is that of providing at least one litter inside each unit which allows, both during breeding and at cycle end, an operation of cleaning and sanitisation which can be performed simply in that limited to the trough of the litter area.

Another object of the present invention is that of providing at least one supplementary internal feeder, suitable for making current breeding batteries for laying hens compliant with current laws, by means of a simple and definitive modification operation.

A further object of the present invention is that of providing a feeding device making use of a trough, shaped so as to facilitate sliding of the eggs which may be deposited therein until they reach the strip, avoiding any risk of breakage.

Another object of the present invention is also that of providing an integrative feeding device which is extremely advantageous compared to the traditional ones, whose reduced costs lower therefore the additional expense for the modifications to the units required by the new laws on the well-being of laying hens.

Last but not least, an object of the present invention is that of providing a method for the modification of the units of batteries, which enables installation of the integrative feeding device without entailing high costs or jeopardising the efficiency of the existing structure.

These objects are achieved by the integrative device for the supply of feedstuff on the litter and feeder area inside the units for breeding batteries for laying hens according to the presente invention, comprising in the presence of at least one trough per unit, of appropriate shape, material and dimensions, suitable for performing the function of supplementary feeder and litter, and means of channelling the flow of foodstuff transferred through gravity from the feeder to said trough.

These and other aspects will be made clearer on later reading of a preferred embodiment of the invention, to be read by way of a nonlimiting example of the more general concept claimed.

The following description refers to the accompanying drawings, in which:
Figure 1 is a perspective view from above of a partial section of a battery of cages with the side feeders and the internal trough used for litter and feeder;
Figure 2 is a perspective view of a detail of Figure 1, wherein the structure of the internal trough and the way in which the latter is connected to the side feeder can be seen;
Figure 3 shows s a preferred embodiment of the internal trough, provided with a symmetrical bend in the middle line and with means for anchorage to the mesh of the floor surface.

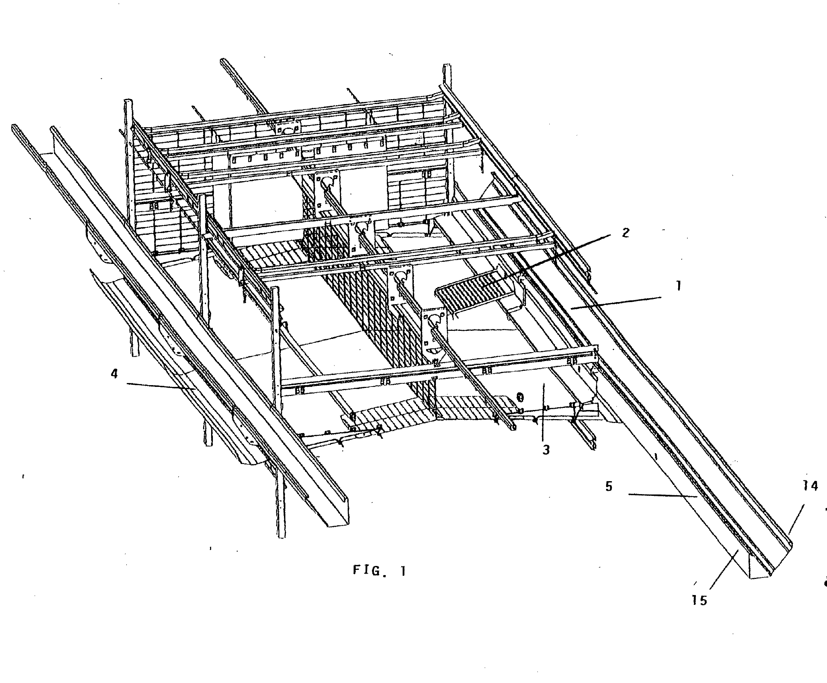

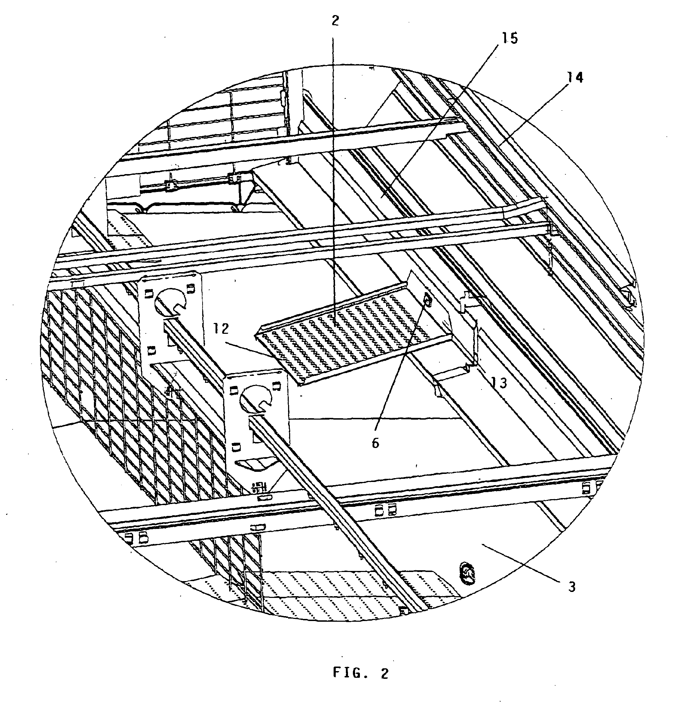

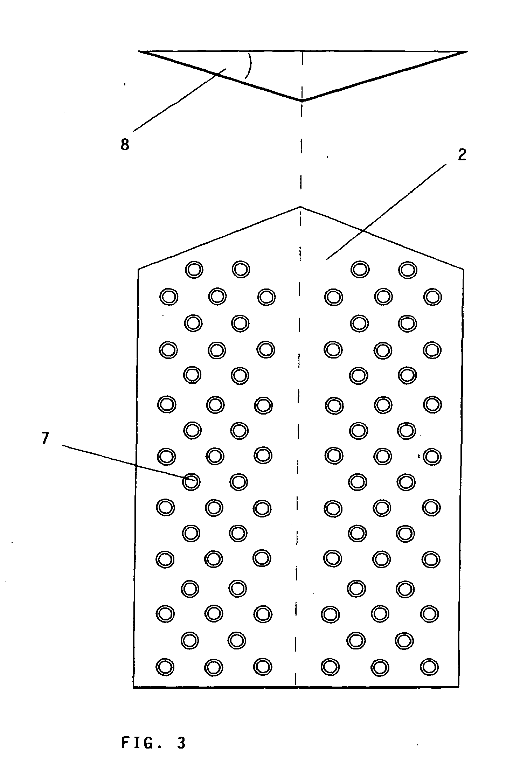

Referring to Figures 1 and 2, in general the breeding battery is of the type known to the state of the art, provided with two opposite sides joined in the middle line via the floor surface (3), with a slant no greater than 8% to allow the eggs to roll as far as the collector of the eggs (4), placed below the side feeder (1). Said side feeder has a vertical wall on the unit side (15) and an external one (14), designed to contain the foodstuff deposited by the distribution means known to the state of the art. The method of installation of the integrative feeding device consists in forming an appropriate number of apertures (6), adequate in size, in said side feeder of the battery. These apertures are suitable for removing, through gravity, a fraction of foodstuff regularly deposited by the feeding means, in order to distribute it on at least one trough (2) placed inside the units. Referring to Figures 2 and 3, said trough performs the function both of litter area and supplementary feeder, such as to make the unit comply, where required, with Italian and European laws currently in force. The quantity of foodstuff which flows onto each trough depends strictly on the frequency of the feeding cycles and on the sizes of the apertures formed in the side feeder. Said trough (2) is made in a such a material as to make it rigid and resistant to a distributed load, and has suitable shape and dimensions to allow a variable number of animals to scratch and peck on it, without the risk of giving way. The trough therefore rests firmly on one side on the mesh of the floor surface (12) while on the other side it is connected to the feeder or the egg saving band by means known to the state of the art (13). To this end the trough can present a vertical bent with and aperture provided onto it, identical to the corresponding one of the vertical wall of the feeder, whereto it is restrained by means of a joining tube of appropriate section, attached in the two apertures according to known means. Alternatively, the trough can be connected directly to the vertical wall on the unit side of the feeder by means of the exit hole formed therein (6), and rested on at least one side on the mesh of the floor surface. The trough, in the preferred embodiment of Figure 3, is connected to the vertical wall of the external feeder by hooking to the egg saving band at the portion of unit below the aperture formed in the feeder. The flow of foodstuff is channelled to the trough by means of a chute connected to the aperture in the feeder, suitable for distributing the foodstuff in the plane of the trough below. The hooking is achieved with known methods, for example thanks to fins that slant in relation to the plane of the trough, not shown in the drawing. The trough also has a tread surface provided throughout with a special anti-slip lattice (7), made through roughing or another known system, such as to guarantee the hens greater safety against possible accidents and facilitate rolling of the eggs. Said trough is shaped so as to have at least one plane slanting in relation to the horizontal plane, both in the longitudinal and in the transverse direction: in this way the eggs placed on said trough can roll onto the mesh of the floor surface, and then in a transverse direction as far as the collector of the eggs. In the preferred embodiment shown in Figure 3, the trough has a double symmetrical bend in relation to the middle line, which offers two side slanting planes (8) for rolling of the eggs, in addition to the longitudinal slant of the axis of the trough itself.

It is clear from examination of the drawings illustrated that this integrative feeding device and the method of installation entail a minimum cost of modification to the breeding batteries already installed and in operation, and allow operations with great flexibility, meeting the various demands of breeders, with the possibility of managing the flow of food by adjusting the number or the dimensions of the apertures, as well as the number or dimensions of the supplementary internal troughs in relation to the features of the battery and to the number of laying hens present.

## Claims

1. - An integrative device for the supply of feedstuff on the litter and feeder area inside the units for breeding batteries for laying hens, each unit comprising a feeder (1), **characterised in** the presence of at least one trough (2) per unit, of appropriate shape, material and dimensions, suitable for performing the function of supplementary feeder and litter, and means of channelling the flow of foodstuff transferred through gravity from the feeder (1) to said trough (2).

2. - Device according to claim 1, **characterised in** the presence of at least one trough (2), of appropriate material, shape and dimensions, whose flat surface can be provided with non-slip elements (7), said trough (2) being connected to the side feeder (1).

3. - Device according to claims 1 and 2, **characterised in** the presence of a trough (2) hooked on one side to the mesh of the floor surface (3) and on the other side connected to the side feeder (1) or to the eggs saving band, shaped such as to have at least one plane (8) appropriately slanted in relation to the horizontal plane.

4. - Device according to the previous claims, **characterised in that** the means for channelling the flow of foodstuff are formed by means of an aperture (6) on the vertical bend of the trough (2), identical to the corresponding one of the vertical wall of the feeder, whereto it is restrained by means of a joining tube of appropriate section, attached in the two apertures according to known means.

5. - Device according to the previous claims, **characterised in that** the means for channelling the flow of foodstuff are formed by means of a chute connected to the aperture in the feeder, suitable for distributing the foodstuff in the plane of the trough below.

6. - Method of installation of the integrative device for feeding foodstuff on the litter and feeder area inside the cells for breeding batteries for laying hens, according to the previous claims, **characterised in that** at least one aperture (6) is formed, of suitable dimensions and shape, in the side feeder (1) at each unit, and at least one trough (2) is inserted in a position below said aperture (6), which allows channelling of the flow of foodstuff, in such a way that the latter can be distributed on said trough (2).

## Patentansprüche

1. - Integrative Vorrichtung für die Verteilung von Nahrungsmitteln auf dem Streu- und Fressbereich innerhalb einer Käfigeinheit für das Züchten von Legehennen, wobei zu jeder Einheit ein Futterzubringer (1) gehört, **gekennzeichnet dadurch, dass** sie mindestens einen Trog (2) passender Form, Materials und Grösse pro Einheit und geeignet, die Funktion eines zusätzlichen Futter- und Streuzubringers zu erfüllen sowie Mitteln zum Lenken des durch Schwerkraft vom Futterzubringer (1) zu genanntem Trog (2) beförderten Nahrungsmitteldurchflusses aufweist.

2. - Vorrichtung nach Anspruch 1, **dadurch gekennzeichnet, dass** mindestens ein Trog (2) geeigneter Form, Materials und Grösse vorhanden ist, dessen glatte Oberfläche mit rutschfesten Elementen (7) versehen ist, wobei genannter Trog (2) an den seitlichen Futterzubringer (1) angeschlossen wird.

3. - Vorrichtung nach Anspruch 1 und 2, **dadurch gekennzeichnet, dass** ein Trog (2) vorhanden ist, der an einer Seite an den Eingriff an der Bodenfläche (3) eingehakt ist und an der anderen Seite an den seitlichen Futterzubringer (1) oder an das Eierschutzband angeschlossen ist und derart ausgebildet ist, dass mindestens eine Ebene (8) zur waagerechten Ebene geeignet abgeschrägt ist.

4. - Vorrichtung nach den vorhergehenden Ansprüchen, **dadurch gekennzeichnet, dass** die Mitteln zum Lenken des Nahrungsmitteldurchflusses durch eine Öffnung (6) auf der senkrechten Krümmung des Trogs (2) gebildet sind, die identisch zur entsprechenden Öffnung der senkrechten Wand des Futterzubringers ist, wohin sie durch ein an die zwei Öffnungen mit bekannten Mitteln angeschlossenes Verbindungsrohr geeigneten Querschnitts begrenzt ist.

5. - Vorrichtung nach den vorhergehenden Ansprüchen, **dadurch gekennzeichnet, dass** die Mitteln zum Lenken des Nahrungsmitteldurchflusses aus einer Rutsche bestehen, die mit der Öffnung im Futterzubringer verbunden ist, geeignet zum Verteilen der Nahrungsmitteln in der Ebene des darunter befindlichen Trogs.

6. - Montageverfahren der integrativen Vorrichtung für die Verteilung von Nahrungsmitteln auf dem Streu- und Fressbereich innerhalb der Käfige für das Züchten von Legehennen nach den vorhergehenden Ansprüchen, **dadurch gekennzeichnet, dass** mindestens eine Öffnung (6) passender Grösse und Form im seitlichen Futterzubringer (1) von jeder Einheit vorhanden ist und mindestens ein Trog (2) in eine Position unterhalb genannter Öffnung (6) eingesetzt ist, so dass der Nahrungsmitteldurchfluss so gelenkt wird, dass er auf genanntem Trog (2) verteilt werden kann.

## Revendications

1. Dispositif intégré pour l'approvisionnement d'aliments au niveau de la litière et de la zone d'alimentation à l'intérieur des unités de batteries d'élevage de poules pondeuses, chaque unité comprenant une mangeoire, **caractérisé par** la présence d'au moins une auge (2) par unité, de forme, de taille et de matériau appropriés, pouvant remplir la fonction de mangeoire et de litière supplémentaires et de moyen d'acheminement du flux d'aliments transférés par la gravité de la mangeoire (1) à l'auge (2).

2. Dispositif comme décrit à la revendication 1, **caractérisé par** la présence d'au moins une auge (2) de forme, de taille et de matériau appropriés, dont la surface plane peut être munie d'éléments anti-dérapage (7), ladite auge (2) étant reliée à la mangeoire latérale (1).

3. Dispositif conformément aux revendications 1 et 2, **caractérisé par** la présence d'une auge (2) recourbée d'un côté vers les mailles du plancher (3) et reliée de l'autre côté à la mangeoire latérale (1) ou à la bande de retenue des oeufs, dont la forme a été aménagée de manière à disposer d'un plan (8) incliné suivant un angle approprié par rapport au plan horizontal.

4. Dispositif conformément aux revendications ci-dessus, **caractérisé par le fait que** le dispositif d'acheminement du flux d'aliments consiste en un orifice (6) au niveau du coude vertical de l'auge (2), identique à celui sur la paroi verticale de la mangeoire dans lequel il est maintenu au moyen d'un tube de raccordement de section appropriée, fixé dans les deux orifices à l'aide de moyens connus.

5. Dispositif conformément aux revendications ci-dessus, **caractérisé par le fait que** le dispositif d'acheminement du flux d'aliments consiste en une goulotte de descente reliée à l'orifice de la mangeoire, destinée à la distribution des aliments sur le plan de l'auge en dessous.

6. Méthode d'installation du dispositif intégré d'approvisionnement d'aliments au niveau de la litière et de la zone d'alimentation à l'intérieur des cellules des batteries d'élevage de poules pondeuses, conformément aux revendications ci-dessus, **caractérisée par le fait qu'**au moins un orifice (6), de taille et de forme appropriées, est aménagé dans la mangeoire latérale (1) de chaque unité, et qu'au moins une auge (2) est disposée en dessous dudit orifice (6), permettant l'acheminement du flux d'aliments de manière à en assurer la distribution dans l'auge (2).
